# EUROPEAN PATENT APPLICATION

(11) **EP 1 413 977 A2**
(43) Date of publication of application: **28.04.2004**
(21) Application number: 03256620.0
(22) Date of filing: 21.10.2003
(51) Int. Cl.: G06K 17/00

(54) **ID information managing system and apparatus comprising it**

(30) Priority: 23.10.2002 JP 2002308076; 07.04.2003 JP 2003102858
(71) Applicant: Fanuc Ltd, Minamitsuru-gun, Yamanashi 401-0597 (JP)
(72) Inventor: Noda, Hiroshi, Room 11-603 FANUC, Minamitsuru-gun Yamanashi, 401-0511 (JP); Fuchigami, Hiroshi, FANUC Dai3virakaramatsu, Minamitsuru-gun Yamanashi, 401-0511 (JP)
(74) Representative: Billington, Lawrence Emlyn

(57) **Abstract**

An ID information managing system capable of improving manageability and maintainability of ID information of component units constructing a device or an apparatus, and preventing loss of ID information for discriminating characteristics of the component units without increasing operation processes at the time of exchanging the component units, and an apparatus with the ID information managing system. The ID information managing system is for reading the ID information specific to each component unit of an apparatus comprising a plurality of component units. The ID information managing system comprises a non-contact IC tag (22) to be attached to at least one of component units, and tag information receiving means (11) provided in at least one of the component units. The tag information receiving means (11) receives ID information stored in the non-contact IC tag (22) to thereby read the ID information of the component unit. The non-contact IC tag (22) may be attached to a set of function keys (21) provided at a display device (20) for selecting software for the set of function keys (21) identified by the ID information, thereby facilitating exchange of the set of function keys (21) and assignment of functions to the function keys (21).

## Description

### BACKGROUND OF THE INVENTION

### 1. Field of the Invention

The present invention relates to various devices and apparatuses such as motors, amplifiers and controllers for constituting an industrial machine such as a machine tool and a robot, and in particular to a system for managing ID information in these devices and apparatuses.

### 2. Description of the Related Art

Generally, each of various devices and apparatuses for constituting industrial machines comprises a plurality of component units. ID information specific to each component unit is managed on the basis of specifics of a kind, operation conditions, and performance characteristics of each component unit by referring to a name plate and specifications.

Maintenance for an occasion of failure of these devices and apparatuses requires information including version numbers, lot numbers, serial numbers and the like, in addition to kinds, types, and specifics of the component units. These pieces of information necessary for the maintenance are obtained also by reference to specifications, manuals and name plates of the component units.

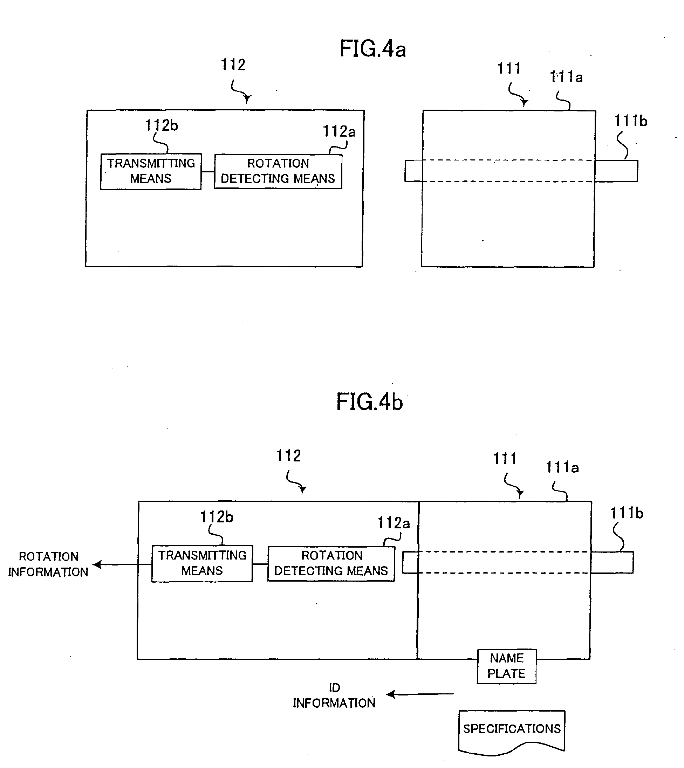

FIGS. 4a and 4b each show an example in which the above-described prior art is applied to a motor. As illustrated in FIG. 4a, the motor comprises a mechanical section 111 including a rotor 111b and a stator 111a and a detecting section 112 including rotation detecting means 112a, such as an encoder, for detecting a rotation state of the rotor 111b and transmitting means 112b for transmitting the rotation information detected by the rotation detecting means 112a.

In case that the mechanical section 111 is exchanged, the ID information specific to the mechanical section 111 is read from a name plate 113 and specifications 114 of the mechanical section 111, and the information is then written in a controller, such as a numerical control device using a motor, through manual operation.

In case that the component units connected to a control device of a machine tool or robot are exchanged for others, these component units must be compatible with the control device, for example, in terms of the operating conditions and performance characteristics including the applied voltage, clock frequency, and so on. It is inconvenient to check such specifics as operating conditions, performance characteristics and the like, by reference to specifications, manuals, and name plates to carry out the exchanging work. Moreover, there is fear that an inappropriate apparatus is exchanged due to an error in reading specifics.

Given these factors, it is suggested that the component units be provided with storage means, and that such ID information specific to the apparatus as kinds, lot numbers, and specifics of the component units be indicated on a display unit.

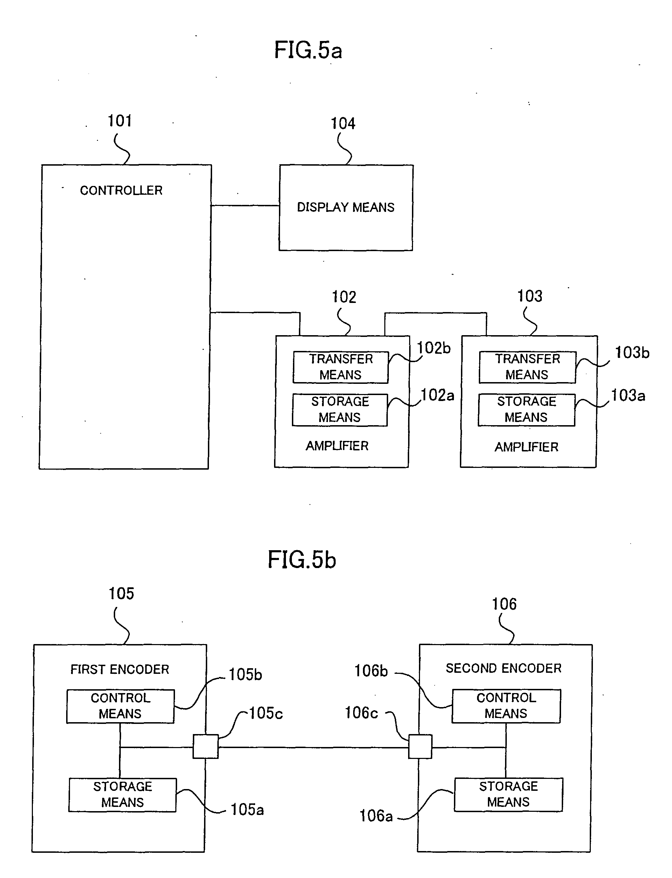

For instance, FIG. 5a is a schematic view for explaining an example suggested above. Component units, such as amplifiers 102 and 103 (or motors), that are connected to a controller 101 of a machine tool or robot, are provided with storage means 102a and 103a that store data for discriminating the kinds and characteristics of the component units and data for the maintenance of the component units. The data stored in the storage means 102a and 103a are read from the controller 101 to be displayed on the display unit 104. An example of such prior art is described in JP 10-124131A.

The method suggested by the above JP 10-124131A is convenient when the compatibility of motors and amplifiers is determined and managed since the information of the component units, such as amplifiers and motors, is displayed. In cases where the component units have to be exchanged due to some trouble, however, it is required to write the information related to the component units such as motors and amplifiers. In addition, if various parameters that have been utilized are attached, it is also required to adjust the parameters to optimum values. As examples of the information associated with a motor, there are a specification figure number, the date of manufacture, a serial number, an ID number (designation of the ID number allows easy call/configuration of various servo/parameter tables corresponding to the respective motors of every kind), error-correction data for a mounting angle that serve as offset values with respect to the magnetic position of the motor body and the reference position at which an encoder is attached (ideally, it is preferable that the offset value be "0", but it is impossible in essentials to make it "0", so that offset data are used as correction data to realize high-precision control), etc.

The motor comprises a mechanical section including a rotor and a stator and detecting means for converting the rotation thereof into an electronic signal and then detecting the same. Storage means that stores the information for discriminating characteristics of the motor is disposed in a detecting section because of its easy electrical mounting.

In case that the encoder serving as the detecting section is changed, adjustment is necessary since characteristics of the system are sometimes altered if the adjustment of the data is neglected. Therefore, it is required to manually input the data through a control device. To input the data through manual operation, however, requires time and labor, and also spoils maintainability.

In light of the aforementioned circumstances, there is proposed an encoder capable of automatically writing in the new encoder the motor-related data that are stored in the old encoder when the encoders are exchanged.

For instance, FIG. 5b is a schematic view for explaining an example proposed above. There are provided storage means 105a and 106a for storing the data related to the motor in the inside of encoders 105 and 106 and connecting means 105c and 106c for connecting between the encoders. The connecting means 105c and 106c connect between the two encoders 105 and 106, making it possible to read the data related to the motor, that is stored in one of the encoders (105 or 106), and then write and copy in the other encoder (106 or 105). Such prior art is described in, for example, JP 11-161336A.

The controller such as a numerical controller with a display device is provided with a set of function keys. A function is assigned to each of the set of function keys by software as indicated on the display device.

In some cases, the display device provided in the controller is of a different size than others depending on a model, and as a result, the number of keys included in a set of function keys provided at the display device occasionally varies. Accordingly, there is prepared different software for each display device in dependence on the number of keys included in the set of function keys, and the software for each display device is selected and then incorporated into the controller.

Another method is to prepare plural pieces of software beforehand and manually set a parameter to selectively operate a piece of software for the display device.

As shown in the prior art described in the above-mentioned JP 11-161336A, however, to copy the information for discriminating the characteristics of component units of the motor into another encoder at the time of exchanging work of the component units of the encoder or the like increases steps of the exchanging work, thereby requiring more labor.

Additionally, there occurs a problem that the work of copying the information is forgotten at the time of the exchanging work, which incurs loss of the information for discriminating the characteristics of the component units.

As mentioned above, various kinds of apparatuses have the problem of inferior manageability and maintainability with respect to the ID information specific to the component units, that is required for maintenance on version numbers, lot numbers, serial numbers and the like, in addition to kinds, types, and specifics of the component units constructing the apparatuses.

Moreover, as to a controller such as a numerical controller with a display device, when the control device is to be shipped, the software for the display device must be selected, or otherwise the parameter must be set, which creates a problem of requiring much manpower. Additionally, since the software is selected manually, there is a possibility that wrong software is selected or that the parameter setting is incorrect.

In light of these problems, there generates an idea of providing ID information to the display device beforehand and connecting the display device to the controller to selectively operate software in conformity with the kind of the display device so that the controller can perform the discrimination automatically. A method in which the ID information is read by cables, however, requires an ID circuit with respect to a set of function keys, and moreover a cable is newly necessary to be connected to the control device. Since the set of function keys has to be disposed in a limited space, however, provision of the ID circuit is extremely difficult or sometimes impracticable in reality.

### SUMMARY OF THE INVENTION

The present invention improves manageability and maintainability of ID information of component units constructing an apparatus and that of function keys. The present invention also prevents loss of the ID information for discriminating characteristics of the component units at the time of exchange of the component units constructing the apparatus or exchange of a set of function keys, or the like, without increasing operation processes.

An ID information managing system according to the present invention is provided for reading the ID information specific to each component unit of an apparatus comprising a plurality of component units. The ID information managing system comprises a non-contact IC tag to be attached to at least one of the component units and tag information receiving means provided to at least one of the component units. The tag information receiving means receives the ID information stored in the non-contact IC tag to thereby read the ID information of the component unit.

ID information is specific to the component units constructing the apparatus and includes information utilized for maintenance on kinds, types, specifics, version numbers, lot numbers, serial numbers, and the like, of the component units, operating conditions, performance characteristics, etc.

The apparatus comprises a plurality of component units, and these component units may be exchanged. The non-contact IC tag stores the ID information of these component units, and the tag information receiving means reads the ID information stored in the non-contact IC tag. The non-contact IC tag and the tag information receiving means are provided in two separate component units, and these component units are joined to each other, making it possible to read the ID information of the component unit to which the non-contact IC tag is attached by using the tag information receiving means that is provided to the other component unit.

On the other hand, the non-contact IC tag and the tag information receiving means may be provided in one and the same component unit to read the ID information of this particular component unit.

The present invention may be applied to a motor as apparatus. The motor comprises a mechanism unit including a rotor and a stator and a detection unit including rotation detecting means for detecting rotation information of the rotor and transmitting means for transmitting the detected rotation information. The non-contact IC tag is attached to the mechanism unit, and the tag information receiving means is provided to the detection unit, thus reading the ID information of the mechanism unit, that is stored in the non-contact IC tag, by using the tag information receiving means.

When a component unit or the detection unit is exchanged, the tag information receiving means provided at the detection unit receives the non-contact IC tag that is attached to the component unit and reads the ID information. The read ID information is transmitted by the transmitting means to a controller, such as a numerical control device, that controls the motor, and then submitted to a setting and an adjusting process.

Furthermore, the present invention may be also applied to function keys provided to the display device. In the apparatus comprising the display device and a device to which the display device is connected as component units, the non-contact IC tag is attached to a set of function keys provided at the display device, and moreover the tag information receiving means is provided in the device. The tag information receiving means is utilized for reading the ID information of the set of function keys of the display device, which is stored in the non-contact IC tag.

The present invention also provides an apparatus comprising a plurality of component units to which the above ID information managing system is applied. At least one of the component units has the non-contact IC tag, while - the tag information receiving means is provided in at least one of the component units. The tag information receiving means receives the ID information stored in the non-contact IC tag, to thereby read the ID information specific to the component unit.

In case that the component units constructing the apparatus are exchanged, the apparatus reads the ID information from the non-contact IC tag attached to each component unit and makes the setting, adjustment, etc. based on this ID information.

The present invention may be applied to a motor including component units of a mechanism unit having a rotor and a stator and a detection unit having rotation detecting means for detecting rotation information of the rotor and transmitting means for transmitting the detected rotation information. In the component units, a non-contact IC tag is attached to the mechanism unit, and tag information receiving means is provided to the detection unit, which enables the tag information receiving means to read the ID information of the mechanism unit, that is stored in the non-contact IC tag.

According to this apparatus, even in case that the mechanism unit or the detection unit is exchanged, the ID information of the exchanged unit can be easily renewed to the latest information, making it possible to improve the maintenance.

The present invention is also applied to an apparatus with a display device having function keys and a device connected to the display device. The present invention is so designed that the non-contact IC tag is attached to a set of function keys provided at the display device, whereas the tag information receiving means is provided at the device, to thereby read the information of the set of function keys stored in the non-contact IC tag by the tag information receiving means.

What is required is only the provision of the non-contact IC tag to the function keys, which facilitates incorporation of the function keys into the display device.

### BRIEF DESCRIPTION OF THE DRAWINGS

FIG. 1 shows schematic block diagrams for explaining embodiments of the present invention;
FIG. 2 shows schematic block diagrams for explaining other embodiments of the present invention;
FIG. 3 shows a schematic block diagram for explaining still another embodiment of the present invention;
FIG. 4 shows views of examples in which the prior art is applied to a motor; and
FIG. 5 shows views for explaining examples of construction of prior art.

### DETAILED DESCRIPTION

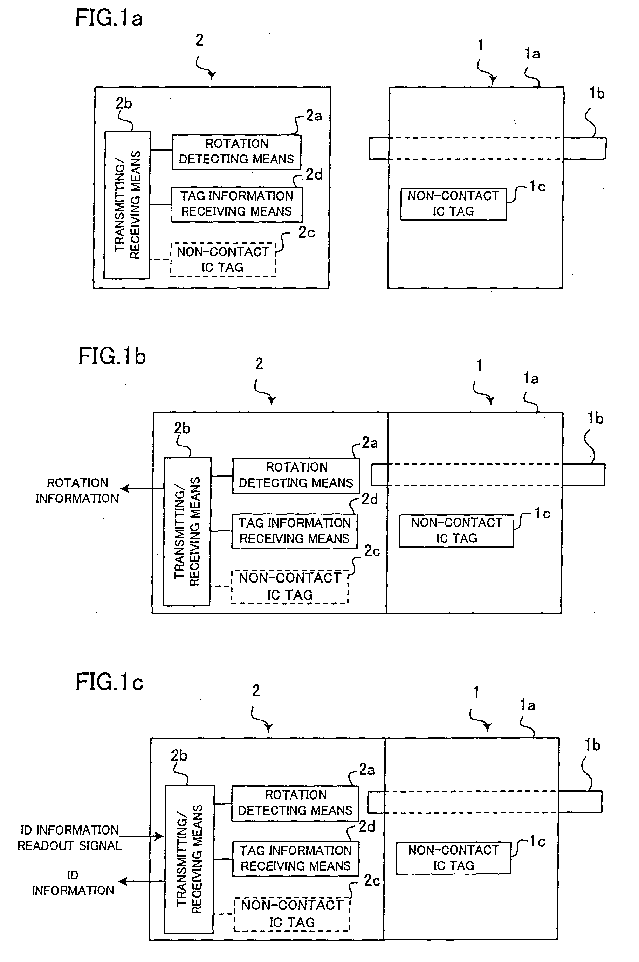

FIG. 1 illustrates examples of construction in which an ID information managing system of the present invention is applied to a motor.

The motor comprises a mechanism unit 1 including a rotor 1b and a stator 1a and a detection unit 2 including rotation detecting means 2a for detecting rotation information of the rotor 1b and transmitting/receiving means 2b for transmitting the detected rotation information. A non-contact IC tag 1c for storing ID information specific to the motor is attached to the mechanism unit 1, and tag information receiving means 2d for reading the ID information that is written in the non-contact IC tag 1c is provided to the detection unit 2. ID information is information specific to component units constructing an apparatus and includes, for example, information that is utilized for maintenance on kinds, types, specifics, version numbers, lot numbers, serial numbers, and the like, of the component units, operating conditions, performance characteristics, etc.

The non-contact IC tag is also called a wireless tag, and for instance supplied with electric power through electromagnetic induction from outside to transmit by air the information that is recorded in the inside thereof. The tag information receiving means supplies electric power to the non-contact IC tag and also receives the information transmitted from the non-contact IC tag.

Accordingly, the non-contact IC tag and the tag information receiving means are not required to be connected to each other through a cable or the like. Transmission and reception can be carried out only by locating the non-contact IC tag and the tag information receiving means within a predetermined distance that allows the reception.

The mechanism unit 1 and the detection unit 2 are exchangeable for each other and utilized after being brought into a coupled state (as shown in FIG. 1b and 1c) from a separated state (as shown in FIG. 1a).

The detection unit 2, as illustrated in FIG. 1b, detects a rotation state of the rotor 1b of the mechanism unit 1 through one operation mode. This rotation state is obtained by detecting the rotation information including rotational frequency, rotation position, and the like, of the rotor 1b by using the rotation detecting means 2a, and then transmitting the information to an external controller (numerical control device as an example) through the transmitting/receiving means 2b.

As shown in FIG. 1c, another operation mode of the detection unit 2 is to read the ID information of the mechanism unit 1 on demand from outside. The transmitting/receiving means 2b gives an ID information readout command to the tag information receiving means 2d after receiving an ID information readout signal from outside. The tag information receiving means 2d reads the ID information with respect to the non-contact IC tag 1c in conformity to the ID information readout command. The tag information receiving means 2d receives the ID information transmitted from the non-contact IC tag 1c and transmits the ID information through the transmitting/receiving means 2b to an external control device.

The ID information is the information that is required at the time of exchange of the mechanism unit and the detection unit, or the like, so that the detection unit 2 receives the rotation information in a normal operation mode and drives the tag information receiving means 2d to detect and transmit the ID information only in a readout operation state, that is demanded by the external control device, or the like.

Moreover, the disposition of the non-contact IC tag is not limited to the mechanism unit 1 side and may be the detection unit 2 side. For example, referring to FIG. 1, the non-contact IC tag 2c that stores the ID information related to the detection unit is attached to the detection unit 2 to carry out the readout by using the tag information receiving means 2d. The non-contact IC tags 1c and 2c are capable of reading each piece of the ID information individually, for instance, if drive frequencies are differentiated.

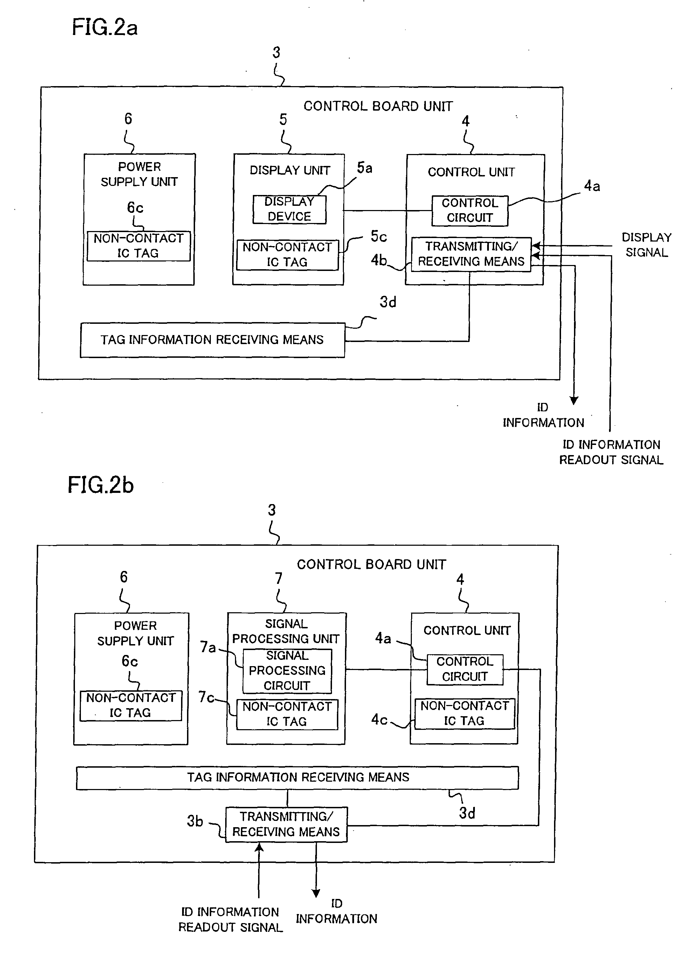

FIGS. 2a and 2b show schematic block diagrams for explaining other embodiments of the present invention. FIGS. 2 a and 2b illustrate examples in which the invention is applied to a controller of a machine.

In the embodiment illustrated in FIG. 2a, a control base board unit 3 included in the controller is surmounted by, for example, a control unit 4, a display unit 5 and a power supply unit 6, and performs displays on an display device 5a of the display unit 5 based on a display signal from outside. The control unit 4 comprises a control circuit 4a for controlling the display unit 5 and transmitting/receiving means 4b for receiving the display signal and reading ID information. Moreover, non-contact IC tags 5c and 6c are attached to the display unit 5 and the power supply unit 6, respectively, and tag information receiving means 3d is provided to the control board unit 3 side.

Based on an ID information readout demand from an external controller, the tag information receiving means 3d reads respective pieces of ID information from the non-contact IC tags 5c and 6c that are attached to the display unit 5 and the power supply unit 6, respectively, and transmits the ID information to the external controller by using the transmitting/receiving means 4b.

In the embodiment shown in FIG. 2b, a control board unit 3 included in a controller is surmounted by, for example, a control unit 4, a signal-processing unit 7, and a power supply unit 6. The control board unit 3 drives a signal-processing circuit 7a of a signal-processing unit 7 based on a display signal from outside. The control unit 4 comprises a control circuit 4a for controlling the signal-processing unit 7. Attached to the control unit 4, the signal-processing unit 7 and the power supply unit 6 are non-contact IC tags 4c, 7c and 6c, respectively. There are provided tag information receiving means 3d and transmitting/receiving means 3b to the control board unit 3 side.

Based on the ID information readout demand from the external controller, the tag information receiving means 3 d reads respective pieces of ID information from the non-contact IC tags 4c, 5c and 6c that are attached to the control unit 4, the signal-processing unit 7 and the power supply unit 6, respectively, and transmits the ID information to the external controller by using the transmitting/receiving means 3b.

The embodiments illustrated in FIG. 2 make it possible to easily read the ID information of each unit that is superimposed on the control board unit 3 and to improve manageability and maintainability of the ID information of the component units.

It is also possible to omit a work process of referring to specifications, manuals, etc., at the time of exchange of the component units constructing the controller, or the like, thereby preventing loss of the ID information, that occurs along with such work.

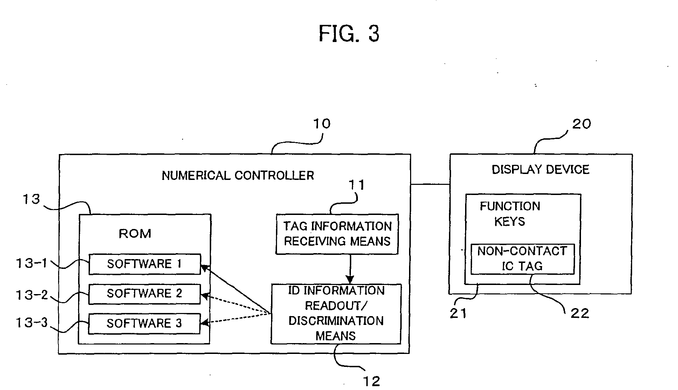

FIG. 3 is a block diagram showing a main part of still another embodiment of the present invention. In this embodiment, a non-contact IC tag is provided to a set of function keys provided at a display device. There are provided display devices in controllers for controlling various machines and devices such as robots, etc., and also in various devices and apparatuses. Some of these display devices are designed to include a set of function keys each of which is assigned to a specific function. As an example of such devices and apparatuses, FIG. 3 shows an example of a numerical control device for controlling a machine tool or the like. There is mounted a display device 20 on a numerical controller 10. The display device 20 is provided with a set of function keys 21 and the set of function keys 21 is provided with a non-contact IC tag 22. The non-contact IC tag 22 stores information including a model name and a size of the display device, and the number of keys, as ID information with respect to the set of function keys 21 of the display device 20.

In the numerical controller 10, there are provided tag information receiving means 11 for receiving the information of the non-contact IC tag 22 and ID information readout/discrimination means 12. A ROM 13 situated in the numerical controller 10 stores software 13-1, 13-2, 13-3, ..., with respect to the set of function keys provided to the display device that may be connected to the numerical controller 10.

When the set of function keys 21 of the display device 20 is incorporated into the numerical controller 10, the information of an ID tag is read by the tag information receiving means 11. The ID information readout/discrimination means 12 selects from the ROM 13 the software 13-1, 13-2, 13-3, ..., corresponding to the ID information that has been read, and boots up the software. As a result, the software corresponding to the set of function keys 21 attached to the display device 20 is automatically selected and booted up.

As described above, only thing to do as to the display device 20 side is provide the non-contact IC tag 22 to the set of function keys 21 disposed in the display device 20. In cases where a type of the set of function keys 21 is changed, only by accordingly replacing the non-contact IC tag 22, it becomes possible to set a function with respect to each function key and to assign functions to the function keys without difficulty.

The present invention can improve the manageability and maintainability of the ID information of component units constructing an apparatus. Moreover, at the time of exchange of the component units constructing the apparatus, or the like, the present invention can prevent loss of the ID information for discriminating the characteristics of the component units without increasing work processes.

Furthermore, in the present invention, since the non-contact IC tag is attached to the function keys, and the tag information receiving means is provided to the device to which the display device is connected, no new cable for reading the ID information is required, which facilitates the mounting of the set of function keys.

Consequently, it is possible to easily make a variation in which a set of function keys having a different number of keys is assigned to the display device of a certain size.

## Claims

1. An ID information managing system for managing ID information specific to each of a plurality of component units of an apparatus, comprising:
a non-contact IC tag to be attached to at last one of said component units and for storing ID information on the at least one of said component units, and
tag information receiving means provided in at least one of said component units for receiving the ID information stored in said non-contact IC tag to thereby read the ID information on the at least one of the component units.

2. An ID information managing system according to claim 1, wherein said component units include a mechanical unit having a rotor and a stator, and a detection unit having rotation detecting means for detecting rotation information on said rotor and transmitting means for transmitting the detected rotation information, and said non-contact IC tag is attached to said mechanical unit, and said tag information receiving means is provided at said detection unit, so that ID information on the mechanical unit stored in the non-contact IC tag is read by the tag information receiving means.

3. An ID information managing system according to claim 1, wherein said component units include an display device having a set of function keys and a device connected to said display device, and said non-contact IC tag is attached to the set of function keys of the display device and said tag information receiving means is provided in said device, so that ID information on the set of function keys stored in said non-contact IC tag is read by said tag information receiving means.

4. An apparatus with an ID information managing system, comprising:
a plurality of component units, at least one of said component units being provided with a non-contact IC tag storing ID information specific to the at least one component unit, and at least one of said component units being provided with tag information receiving means for receiving ID information stored in said non-contact IC tag to read the ID information on the at least one component unit.

5. An apparatus with the ID information managing system according to claim 4, wherein said component units include a mechanical unit having a rotor and a stator, and a detection unit having rotation detecting means for detecting rotation information on said rotor and transmitting means for transmitting the detected rotation information, and said non-contact IC tag is attached to said mechanical unit, and said tag information receiving means is provided at said detection unit, so that ID information on the mechanical unit stored in the non-contact IC tag is read by the tag information receiving means.

6. An apparatus with an ID information managing system according to claim 4, wherein said component units include an display device having a set of function keys and a device connected to said display device, and said non-contact IC tag is attached to the set of function keys of the display device and said tag information receiving means is provided in said device, so that ID information on the set of function keys stored in said non-contact IC tag is read by said tag information receiving means.
